(19) Europäisches Patentamt
European Patent Office
Office européen des brevets

(11) **EP 3 422 519 B1**

(12) **FASCICULE DE BREVET EUROPEEN**

(45) Date de publication et mention
de la délivrance du brevet:
**19.02.2020   Bulletin 2020/08**

(51) Int Cl.:
*H02J 3/14* *(2006.01)*
*H02J 3/38* *(2006.01)*
*G06Q 10/06* *(2012.01)*
*G06Q 50/06* *(2012.01)*
*H02J 7/35* *(2006.01)*

(21) Numéro de dépôt: **18177938.0**

(22) Date de dépôt: **15.06.2018**

(54) **PROCÉDÉ DE DISTRIBUTION D'UNE ÉNERGIE ÉLECTRIQUE ISSUE D'UNE ÉNERGIE SOLAIRE À UNE PLURALITÉ DE GROUPES D'AU MOINS UNE INSTALLATION ÉLECTRIQUE**

VERFAHREN ZUR VERTEILUNG DER VON EINEM SOLARKRAFTWERK ERZEUGTEN ELEKTRISCHEN ENERGIE AN EINE VIELZAHL VON GRUPPEN IN MINDESTENS EINER ELEKTRISCHEN ANLAGE

METHOD FOR DISTRIBUTING ELECTRICAL ENERGY GENERATED BY A SOLAR POWER PLANT TO A PLURALITY OF GROUPS IN AT LEAST ONE ELECTRICAL INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2017   FR 1756076**

(43) Date de publication de la demande:
**02.01.2019   Bulletin 2019/01**

(73) Titulaire: **Sagemcom Energy & Telecom SAS**
**92500 Rueil-Malmaison (FR)**

(72) Inventeurs:
• **BESSIENE, Daniel**
  **92500 RUEIL MALMAISON (FR)**
• **FOLLET, Thierry**
  **92500 RUEIL MALMAISON (FR)**

(74) Mandataire: **Lavaud, Thomas et al**
**Cabinet Boettcher**
**16, rue Médéric**
**75017 Paris (FR)**

(56) Documents cités:
**EP-A1- 2 802 059        EP-A1- 2 869 250**
**WO-A1-2015/015528**

**Description**

L'invention concerne le domaine des procédés de distribution d'une énergie électrique issue d'une énergie solaire à une pluralité de groupes d'au moins une installation électrique.

ARRIERE PLAN DE L'INVENTION

On assiste, dans certains pays où le taux d'ensoleillement est important et où le réseau électrique traditionnel n'est pas accessible sur l'ensemble du territoire, au développement de centrales électriques solaires autonomes.

Une centrale comporte classiquement une pluralité de panneaux photovoltaïques, des batteries pour stocker une énergie électrique issue de l'énergie solaire, et divers équipements de puissance destinés à convertir et à distribuer l'énergie électrique.

L'énergie électrique est utilisée pour alimenter des installations électriques diverses. Une telle installation électrique est par exemple intégrée dans un site de télécommunication ou bien dans une habitation ou un dispensaire d'un village isolé.

On obtient ainsi des réseaux électriques isolés du réseau électrique traditionnel. On parle aussi de réseaux *off-grid*. Un tel réseau électrique divulgué dans le document WO 2015/015528 A1 par exemple.

La quantité d'énergie électrique disponible dans un tel réseau électrique isolé dépend bien sûr de l'ensoleillement de la zone dans laquelle se trouve la centrale. L'énergie solaire est une source d'énergie intermittente. L'énergie électrique stockée dans les batteries de la centrale permet d'alimenter les installations électriques au cours des périodes sans soleil.

On constate que le coût de stockage de l'énergie électrique produite par la centrale est prépondérant dans un réseau électrique isolé, et est typiquement compris entre 50% et 60% du coût total du réseau électrique isolé.

OBJET DE L'INVENTION

L'invention a pour objet de réduire le coût du stockage de l'énergie électrique dans un réseau électrique isolé, tout en évitant des coupures de longue durée.

RESUME DE L'INVENTION

En vue de la réalisation de ce but, on propose un procédé de distribution d'une énergie électrique issue d'une énergie solaire à une pluralité de groupes d'au moins une installation électrique, comprenant les étapes de :

- définir, pour chaque groupe, un profil de consommation formé par des pourcentages de consommation associés chacun à une heure distincte d'une journée de référence ;
- pour chaque nouvelle journée, définir pour chaque groupe une quantité d'énergie journalière disponible et, à partir du profil de consommation et de la quantité d'énergie journalière disponible, allouer au groupe un crédit d'énergie pour chaque heure de la nouvelle journée ;
- à un temps T situé dans une heure courante, estimer une quantité d'énergie consommée courante qui a été consommée par le groupe, et estimer une quantité d'énergie consommée précédente qui a été consommée à la fin d'une heure précédente ;
- au temps T, estimer une quantité d'énergie disponible qui était disponible à la fin de l'heure précédente ;
- si une différence entre la quantité d'énergie consommée courante et la quantité d'énergie consommée précédente est supérieure ou égale à la somme de la quantité d'énergie disponible et d'un crédit d'énergie alloué pour l'heure courante, couper la distribution d'énergie électrique à destination du groupe jusqu'au début d'une heure suivante.

Le procédé de distribution selon l'invention permet, lorsque cela est nécessaire, de limiter la consommation des groupes d'installations électriques en effectuant des coupures d'alimentation individuelles, courtes, et donc peu pénalisantes. On diminue ainsi sensiblement la capacité et donc le coût des batteries qui stockent l'énergie électrique, tout en évitant des coupures de longue durée.

On propose aussi un équipement électrique de contrôle d'une centrale électrique solaire, l'équipement électrique de contrôle comprenant un module de communication et un composant de traitement agencé pour mettre en œuvre le procédé de distribution qui vient d'être décrit.

On propose aussi un réseau électrique isolé comportant une centrale électrique solaire et une pluralité de groupes d'au moins une installation électrique, la centrale électrique solaire comprenant un équipement électrique de contrôle tel que celui qui vient d'être décrit.

On propose de plus un programme d'ordinateur comprenant des instructions pour mettre en œuvre, par un microcontrôleur d'un équipement électrique de contrôle d'une centrale électrique solaire, le procédé de distribution qui vient d'être décrit.

On propose en outre des moyens de stockage, caractérisés en ce qu'ils stockent un programme d'ordinateur comprenant des instructions pour mettre en œuvre, par un microcontrôleur d'un équipement électrique de contrôle d'une centrale électrique solaire, le procédé de distribution qui vient d'être décrit.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 représente un premier réseau électrique isolé dans lequel est mis en œuvre un procédé de distribution selon l'invention ;
- la figure 2 est un tableau comprenant des valeurs de pourcentage de consommation associées à chaque heure d'une journée de référence, le tableau formant un profil de consommation ;
- la figure 3 représente des étapes du procédé de distribution selon l'invention ;
- la figure 4 représente un deuxième réseau électrique isolé dans lequel est mis en œuvre le procédé de distribution selon l'invention ;
- la figure 5 représente un coffret de distribution décentralisé utilisé dans le deuxième réseau électrique isolé.

DESCRIPTION DETAILLEE DE L'INVENTION

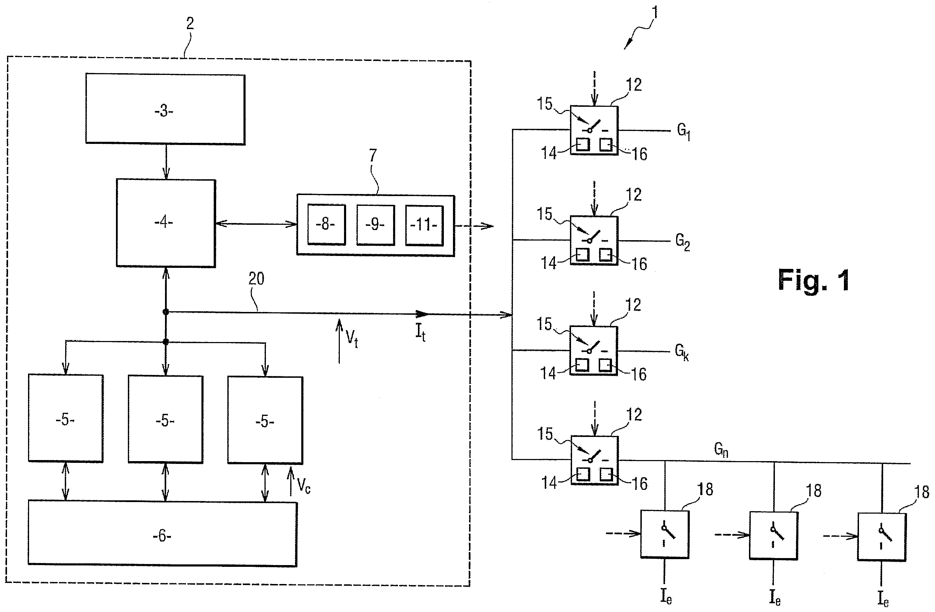

En référence à la figure 1, le procédé de distribution selon l'invention est mis en œuvre dans un premier réseau électrique isolé 1.

Le premier réseau électrique isolé 1 comporte une centrale électrique solaire autonome 2 et une pluralité d'installations électriques $I_e$ alimentées par la centrale électrique solaire 2.

La centrale 2 comporte un groupe de panneaux photovoltaïques 3, un onduleur photovoltaïque 4, une pluralité d'onduleurs chargeurs 5, un groupe de batteries 6 et un équipement électrique de contrôle 7. Les batteries 6 sont des batteries au plomb.

Les panneaux photovoltaïques 3 convertissent une énergie solaire en une énergie électrique continue.

L'onduleur photovoltaïque 4 convertit l'énergie électrique continue en une énergie électrique alternative. L'énergie électrique alternative se présente ici sous la forme d'un courant triphasé $I_t$ et d'une tension triphasée $V_t$ de tension efficace égale à 230V.

La tension triphasée $V_t$ est appliquée en entrée des onduleurs chargeurs 5. Ainsi, lorsque les conditions météorologiques permettent la charge des batteries 6, chaque onduleur chargeur 5 transforme la tension triphasée $V_t$ en une tension de charge $V_c$ qui charge le groupe de batteries 6. La tension de charge $V_c$ est ici une tension négative de -48V. Les pôles positifs des batteries 6 sont mis à la terre.

L'équipement électrique de contrôle 7 comporte un composant de traitement 8 et une mémoire 9. Le composant de traitement 8 est ici un microcontrôleur. Le composant de traitement 8 pourrait être un composant différent, par exemple un processeur ou un FPGA.

Le microcontrôleur pilote le fonctionnement du réseau électrique isolé 1. Le microcontrôleur est ainsi notamment adapté à exécuter des instructions d'un programme pour mettre en œuvre le procédé de distribution selon l'invention.

L'équipement électrique de contrôle 7 comporte de plus un premier module de communication 11. Le premier module de communication 11 est ici un module de communication par courants porteurs en ligne.

Les installations électriques $I_e$, quant à elles, sont réparties en une pluralité de groupes, en l'occurrence en n groupes $G_k$. Chaque groupe $G_k$ comporte une ou plusieurs installations électriques $I_e$. Les groupes $G_k$ correspondent possiblement (mais pas nécessairement) à une répartition géographique des installations électriques $I_e$.

Un compteur réseau 12 est positionné en amont de chaque groupe $G_k$. Par « en amont », on entend du côté de la centrale 2, c'est-à-dire du côté de la source d'énergie. Par « en aval », on entend du côté d'une installation électrique $I_e$, c'est à dire du côté du consommateur d'énergie.

Chaque compteur réseau 12 comporte des moyens de mesure 14, un organe de coupure 15 et un deuxième module de communication 16.

Les moyens de mesure 14 permettent de mesurer une quantité d'énergie électrique consommée par le groupe $G_k$. Les mesures sont transmises à l'équipement électrique de contrôle 7 grâce au premier module de communication 11 et au deuxième module de communication 16.

Le deuxième module de communication 16 est ici un module de communication par courants porteurs en ligne.

L'organe de coupure 15 est un commutateur qui permet de couper la distribution d'énergie électrique à desti-

nation du groupe $G_k$. L'organe de coupure 15 est commandé par un composant de commande du compteur réseau 12, qui est lui-même commandé par l'équipement électrique de contrôle 7. Les commandes de l'organe de coupure 15 sont transmises grâce au premier module de communication 11 et au deuxième module de communication 16.

Certaines installations électriques $I_e$ sont par ailleurs équipées d'un compteur individuel 18. Le compteur individuel 18 d'une installation électrique $I_e$ est alors positionné en amont de l'installation électrique $I_e$ et en aval du compteur réseau 12 du groupe $G_k$ correspondant. Chaque compteur individuel 18 comporte des moyens de mesure et, éventuellement, un organe de coupure et un module de communication par courants porteurs en ligne.

Les groupes $G_k$ d'installations électriques $I_e$ sont alimentés par la tension triphasée $V_t$ appliquée sur une ligne triphasée 20. A l'intérieur d'un même groupe $G_k$, l'énergie électrique est ensuite distribuée aux installations électriques $I_e$ du groupe $G_k$ par une ligne monophasée.

On décrit maintenant plus en détail le procédé de distribution selon l'invention.

On illustre le procédé de distribution en utilisant quatre groupes constitués chacun d'une ou de plusieurs installations électriques.

Le procédé de distribution consiste tout d'abord à définir, pour chaque groupe, un profil de consommation.

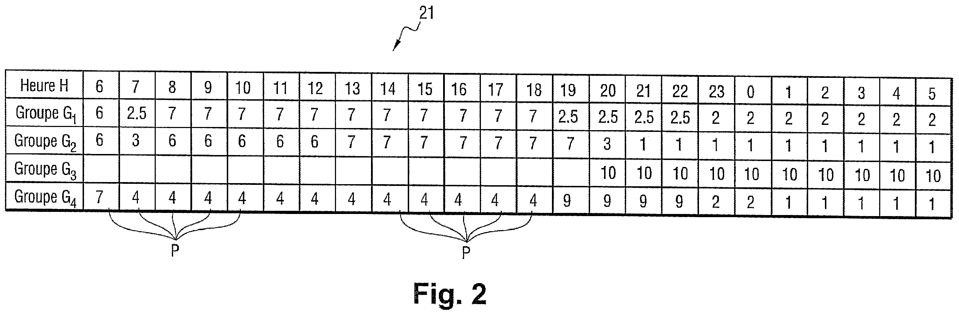

Le profil de consommation est formé par des pourcentages de consommation associés chacun à une heure distincte d'une journée de référence. Un tel profil de consommation est visible sur la figure 2. Le profil de consommation de la figure 2 est le profil de quatre groupes : groupe $G_1$, groupe $G_2$, groupe $G_3$ et groupe $G_4$.

On considère dans le tableau 21 de la figure 2 que la journée de référence débute à 6h00 du matin.

Pour chaque heure H de la journée de référence, le pourcentage de consommation P indiqué correspond à une quantité d'énergie consommée au cours de l'heure H par rapport à une quantité d'énergie journalière consommée au cours de la journée de référence.

Une journée de référence est une journée « type ». Les pourcentages de consommation P correspondent donc à des pourcentages moyens attendus, anticipés, pour chaque groupe $G_k$.

Ainsi, on constate par exemple que la consommation attendue entre 6h00 et 6h59 pour le groupe G4 correspond à 7% de la quantité d'énergie journalière consommée par le groupe $G_4$ au cours de la journée de référence.

Le profil de consommation est stocké dans la mémoire 9 de l'équipement électrique de contrôle 7.

Avant le début de chaque nouvelle journée, on définit, pour chaque groupe $G_k$, une quantité d'énergie journalière disponible $E_k$ pour la nouvelle journée. La somme des quantités d'énergie journalière disponible $E_k$ est donc égale à une quantité d'énergie journalière totale $E_{Tot}$ que peut fournir la centrale pendant la nouvelle journée :

$$E_{Tot} = E_1 + E_2 + E_3 + E_4.$$

Puis, on alloue à chaque groupe $G_k$ un crédit d'énergie pour chaque heure de la nouvelle journée. Le crédit d'énergie est défini à partir du profil de consommation et de la quantité d'énergie journalière disponible $E_k$, en multipliant, pour chaque heure de la nouvelle journée, le pourcentage de consommation par l'énergie journalière disponible $E_k$.

Ainsi, pour une nouvelle journée, on a

$$Cr_k(Ti) = E_k \cdot P_k(Ti),$$

où $Cr_k(Ti)$ est le crédit d'énergie alloué au groupe $G_k$ pour l'heure $T_i$, $E_k$ est la quantité d'énergie journalière disponible pour le groupe $G_k$, et $P_k(Ti)$ est le pourcentage de consommation associé à l'heure Ti pour le groupe $G_k$.

Chaque crédit d'énergie est remis à zéro en début de journée, c'est à dire à 6h00. Il n'y a pas de report, pour une nouvelle journée, de crédits d'énergie non consommés la veille.

Le procédé de distribution comporte ensuite une pluralité d'étapes mises en œuvre au cours de la nouvelle journée.

Ces étapes sont répétées au cours de chaque nouvelle journée. Ces étapes sont réalisées pour chaque groupe $G_k$.

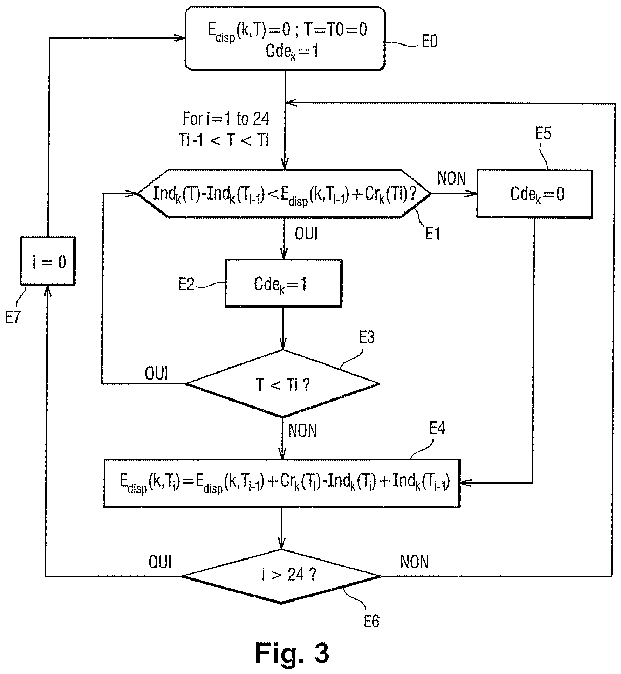

En référence à la figure 3, le procédé de distribution comporte ainsi tout d'abord une étape d'initialisation E0. Au cours de l'étape d'initialisation E0, la variable $Cde_k$ est initialisée à 1, la variable $E_{disp}(k, T)$ est initialisée à 0 pour $T=T0=0$, et la variable i est initialisée à 0.

La variable $Cde_k$ correspond à la commande de l'organe de coupure 15 du compteur réseau 12 associé au groupe $G_k$. Si $Cde_k=1$, l'organe de coupure 15 est fermé (passant) et le groupe $G_k$ reçoit de l'énergie électrique. Si $Cde_k=0$, l'organe de coupure 15 est ouvert (bloqué) et la distribution d'énergie électrique à destination du groupe $G_k$ est interrompue.

Suite à l'étape d'initialisation E0, la variable i est incrémentée. La variable i est alors tout d'abord égale à 1.

Les étapes décrites ci-dessous sont répétées pour chaque heure courante $T_i$ de la nouvelle journée : la première

heure courante $T_1$ s'étend entre 06h00 et 06h59, la deuxième heure courante $T_2$ s'étend entre 7h00 et 7h59, etc.

Le procédé de distribution comporte une étape de comparaison E1.

A un temps T situé dans l'heure courante $T_i$, une quantité d'énergie consommée courante $Ind_k(T)$ est estimée. La quantité d'énergie consommée courante $Ind_k(T)$ est la quantité d'énergie qui a été consommée par le groupe $G_k$ au temps T (on parle aussi d'index de consommation). La quantité d'énergie consommée courante $Ind_k(T)$ est mesurée directement par les moyens de mesure 14 du compteur réseau 12.

Une quantité d'énergie consommée précédente $Ind_k(T_{i-1})$ est aussi estimée. La quantité d'énergie consommée précédente $Ind_k(T_{i-1})$ est la quantité d'énergie qui a été consommée à la fin d'une heure précédente $T_{i-1}$.

On compare alors, d'une part, une différence entre la quantité d'énergie consommée courante $Ind_k(T)$ et la quantité d'énergie consommée précédente $Ind_k(T_{i-1})$, et d'autre part, la somme de la quantité d'énergie disponible $E_{disp}(k, T_{i-1})$ qui était disponible à la fin de l'heure précédente $T_{i-1}$ et le crédit d'énergie $Cr_k(T_i)$ alloué pour l'heure courante $T_i$.

Si

$$\mathrm{Ind_k(T) - Ind_k(T_{i-1}) < E_{disp}(k,\ T_{i-1}) + Cr_k(T_i),}$$

cela signifie que la centrale 2 est en mesure de fournir au groupe $G_k$ l'énergie électrique dont il a besoin pour l'heure courante $T_i$.

La variable $Cde_k$ est maintenue à 1 (étape E2), et donc l'énergie électrique continue d'être distribuée au groupe $G_k$.

Le temps T est alors comparé à un temps qui correspond à la fin de l'heure courante (étape E3). Si le temps T est dans l'heure courante $T_i$, c'est-à-dire si $T<T_i$, le procédé de distribution repasse à l'étape de comparaison E1.

Si le temps T atteint la fin de l'heure courante $T_i$, c'est à dire si l'heure courante est terminée et qu'une nouvelle heure commence, une étape E4 est mise en œuvre.

Au cours de l'étape E4, la variable i est incrémentée :

$$\mathrm{i = i+1.}$$

La quantité d'énergie disponible $E_{disp}(k, T_i)$ est recalculée en utilisant la formule :

$$\mathrm{E_{disp}(k,\ T_i) = E_{disp}(k,\ T_{i-1}) + Cr_k(T_i) - Ind_k(T_i) + Ind_k(T_{i-1}),}$$

où : $E_{disp}(k, T_i)$ est la quantité d'énergie disponible à la fin de l'heure courante $T_i$, $E_{disp}(k, T_{i-1})$ est la quantité d'énergie disponible à la fin de l'heure précédente $T_{i-1}$, $Cr_k(T_i)$ est le crédit d'énergie alloué pour l'heure courante $T_i$, $Ind_k(T_{i-1})$ est la quantité d'énergie consommée à la fin de l'heure précédente $T_{i-1}$, et $Ind_k(T_i)$ est la quantité d'énergie consommée à la fin de l'heure courante $T_i$.

Au cours de l'étape de comparaison E1, si :

$$\mathrm{Ind_k(T) - Ind_k(T_{i-1}) \geq E_{disp}(k,\ T_{i-1}) + Cr_k(T_i),}$$

cela signifie que la centrale 2 n'est plus en mesure de fournir au groupe $G_k$ l'énergie électrique dont il a besoin pour l'heure courante $T_i$.

La variable $Cde_k$ est mise à 0 (étape E5). La distribution d'énergie électrique au groupe k est coupée jusqu'au début d'une heure suivante $T_{i+1}$.

Puis, le procédé de distribution passe à l'étape E4.

Suite à l'étape E4, une comparaison entre la variable i et 24 (pour les 24 heures d'une journée) est effectuée (étape E6).

Tant que la variable i n'est pas supérieure à 24, la nouvelle journée n'est pas terminée. Le procédé de distribution repasse à l'étape de comparaison E1.

Si la variable i est supérieure à 24, alors la nouvelle journée est terminée. La variable i est remise à zéro (étape E7), et le procédé de distribution repasse à l'étape d'initialisation E0.

On note que, lorsqu'un crédit d'énergie n'a pas été entièrement consommé, le crédit d'énergie est reporté au début de l'heure suivante et s'ajoute au crédit d'énergie alloué pour l'heure suivante.

Par défaut, tous les groupes ont la même priorité.

Avantageusement, on attribue des priorités aux groupes $G_k$. Si un crédit d'énergie d'un groupe de haute priorité est épuisé, on alloue un crédit d'énergie d'un groupe de basse priorité au groupe de haute priorité.

Un mécanisme de gestion des priorités est par exemple le suivant. On distingue une priorité 1 affectée à un groupe $G_1$, une priorité 2 affectée à un groupe $G_2$, et une priorité 3 affectée à un groupe $G_3$. La priorité 1 est plus haute que la priorité 2 qui est plus haute que la priorité 3.

Si, au cours d'une journée, le crédit d'énergie alloué au groupe $G_1$ de priorité 1 est épuisé, le groupe $G_1$ récupère les crédits d'énergie des groupes $G_2$ et $G_3$. Un tel groupe $G_1$ comprend par exemple une installation électrique d'un dispensaire d'un village, dont l'alimentation électrique sans coupure est une priorité.

Si, au cours d'une journée, le crédit d'énergie du groupe $G_2$ de priorité 2 est épuisé, le groupe $G_2$ récupère 50% des crédits d'énergie du groupe $G_3$ de priorité 3.

Le groupe $G_3$ de priorité 3 n'est quant à lui pas prioritaire.

On sait que la quantité d'énergie que peut fournir la centrale 2 dépend des conditions météorologiques. Si, pour une nouvelle journée, le nombre d'heures d'ensoleillement des journées précédentes n'a pas été suffisant pour recharger correctement les batteries et que la nouvelle journée n'est pas ensoleillée, la quantité d'énergie journalière totale doit être réduite d'autant.

Le calcul initial de dimensionnement de la centrale est réalisé par rapport au taux de disponibilité requis pour le premier réseau électrique isolé, et tient compte des statistiques météorologiques de la zone dans laquelle se trouve la centrale. Ainsi, le cahier des charges de la centrale peut par exemple exiger de pouvoir fournir une quantité d'énergie E (en kWh), même en l'absence d'ensoleillement pendant 2 jours.

Cependant, si les marges de sécurité prises dans ce calcul ont été réduites, par exemple pour des raisons économiques, il y aura obligatoirement des périodes sans ensoleillement plus grandes que celles qui ont servi au dimensionnement de la centrale et donc, potentiellement, des coupures d'alimentation électrique.

On acquiert donc des données de prévision météorologique sur une certaine durée pour estimer une quantité d'énergie prévisionnelle pouvant être stockée sur la certaine durée, et on prévoit des restrictions en avance afin d'éviter des coupures d'alimentation, jusqu'à la recharge des batteries.

On note k le nombre de journées consécutives sans ensoleillement pendant lesquelles la centrale doit être capable de fournir une quantité d'énergie journalière totale E aux groupes.

Généralement, $1 \leq k \leq 5$.

On note C (en Wh) la quantité d'énergie maximale utilisable pouvant être stockée dans les batteries de la centrale. C correspond seulement à une partie de la capacité totale des batteries, car des décharges profondes sont à proscrire pour préserver la durée de vie des batteries. Typiquement, on ne descend pas en dessous de 40% d'état de charge des batteries.

On a donc :

$$C \geq k.E.$$

Grâce aux données de prévision météorologique, on connaît le nombre d'heures d'ensoleillement sur m jours (avec m>k). On peut donc estimer une quantité d'énergie prévisionnelle $Ep_k$ qui pourra être stockée dans les batteries sur les k prochains jours.

Si $Ep_k<k.E$, cela signifie que la centrale ne pourra pas fournir la quantité d'énergie journalière totale aux groupes pendant k journées consécutives sans ensoleillement. La quantité d'énergie prévisionnelle $Ep_k$ est donc insuffisante par rapport à un nombre de journées consécutives sans ensoleillement pendant lesquelles les groupes doivent être alimentés.

Il y aura donc obligatoirement une coupure d'alimentation électrique de longue durée à la fin d'une période d'alimentation normale.

Pour éviter cette coupure, si la quantité d'énergie prévisionnelle $Ep_k$ est insuffisante par rapport à un nombre de journées sans ensoleillement pendant lesquelles les groupes doivent être alimentés, on ajuste les quantités d'énergie journalière disponible et donc la quantité d'énergie journalière disponible totale.

On choisit de distribuer $Ep_k/k$ à la place de E (en kWh) pour la première journée sans ensoleillement. Le jour suivant, en fonction des nouvelles données de prévision météorologique, la valeur de $Ep_k$ sera réajustée.

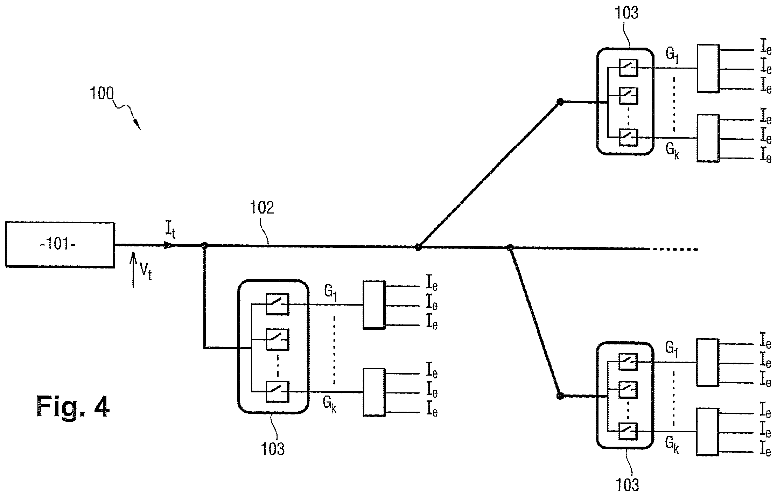

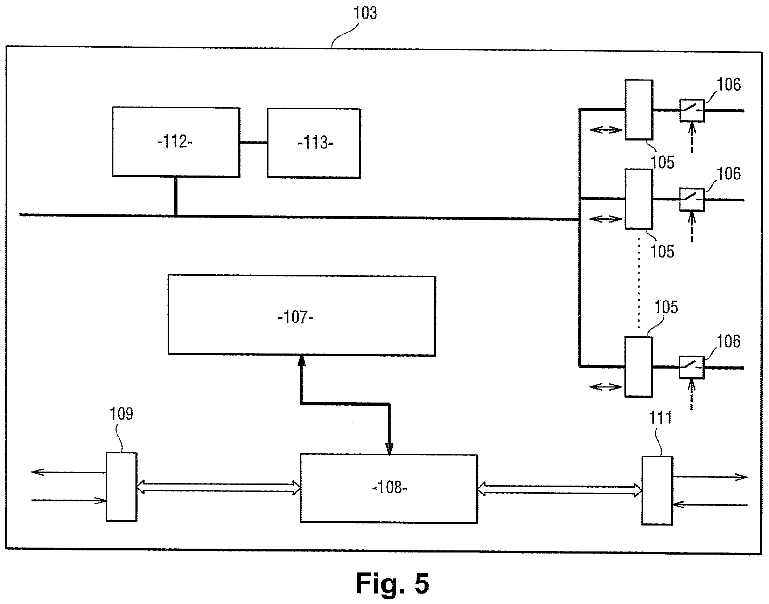

En référence aux figures 4 et 5, le procédé de distribution selon l'invention peut aussi être mis en œuvre dans un deuxième réseau électrique isolé 100.

La centrale électrique solaire 101 est reliée via une ligne électrique principale 102 à des coffrets de distribution décentralisés 103. Un courant triphasé $I_t$ circule sur la ligne électrique principale 102 sous une tension triphasée $V_t$.

Chaque coffret de distribution décentralisé 103 est connecté à plusieurs groupes $G_k$, chaque groupe $G_k$ comprenant une pluralité d'installations électriques $I_e$.

Chaque coffret de distribution décentralisé 103 comporte une pluralité de compteurs 105 et d'organes de coupure 106. Chaque organe de coupure 106 est monté en aval d'un compteur 105.

Chaque coffret de distribution décentralisé 103 comporte, outre les compteurs 105 et les organes de coupure 106, un module de contrôle 107, des moyens d'alimentation, un module Ethernet 108, une interface optique amont 109 et une interface optique aval 111.

Les moyens d'alimentation assurent l'alimentation du coffret de distribution décentralisé 103. Les moyens d'alimentation comprennent une alimentation sans interruption 112 et une batterie 113. L'alimentation sans interruption 112 est reliée à la ligne électrique principale 102.

Le module de contrôle 107 de chaque coffret de distribution décentralisé 103 peut recevoir et transmettre des données au module de contrôle 107 d'un coffret de distribution décentralisé 103 situé en amont, via le module Ethernet 108 et l'interface optique amont 109.

Le module de contrôle 107 de chaque coffret de distribution décentralisé 103 peut recevoir et transmettre des données au module de contrôle 107 d'un coffret de distribution décentralisé 103 situé en aval, via le module Ethernet 108 et l'interface optique aval 111.

La centrale 101, quant à elle, comporte à nouveau un équipement électrique de contrôle. L'équipement électrique de contrôle commande les organes de coupure 106 des coffrets de distribution décentralisés 103 soit par des moyens de communication radio, soit via un canal de communication optique qui utilise les interfaces optiques amont 109 et aval 111 des coffrets de distribution décentralisés 103.

Le procédé de distribution est mis en œuvre de la même manière dans le deuxième réseau électrique isolé 100 que dans le premier réseau électrique isolé 1, si ce n'est que, cette fois, l'équipement électrique de contrôle pilote les organes de coupure 106 en communiquant avec les modules de contrôle 107 des coffrets de distribution décentralisés 103.

Cette option permet d'effectuer des délestages partiels par zone géographique, chaque zone géographique étant associée à un coffret de distribution décentralisé 103.

Bien entendu, l'invention n'est pas limitée au mode de réalisation décrit mais englobe toute variante entrant dans le champ de l'invention telle que définie par les revendications.

Dans le premier réseau électrique isolé, on a indiqué que les modules de communication sont des modules de communication par courants porteurs en ligne. Il est cependant possible que l'équipement électrique de contrôle et les compteurs réseau communiquent de manière différente, par exemple par des moyens de communication radio ou par des canaux de communication optique. Tous ces différents moyens de communication peuvent aussi être utilisés dans le deuxième réseau électrique isolé.

On a évoqué ici des groupes comprenant chacun une pluralité d'installations électriques. Chaque groupe peut cependant être constitué d'une seule installation électrique, associée à un compteur individuel. Dans ce cas, tout ce qui vient d'être dit est applicable en considérant que l'installation électrique est un groupe et que le compteur individuel joue le rôle d'un compteur réseau.

## Revendications

1. Procédé de distribution d'une énergie électrique issue d'une énergie solaire à une pluralité de groupes ($G_k$) d'au moins une installation électrique ($I_e$), comprenant les étapes de :

   - définir, pour chaque groupe, un profil de consommation formé par des pourcentages de consommation (P) associés chacun à une heure distincte d'une journée de référence ;
   - pour chaque nouvelle journée, définir pour chaque groupe une quantité d'énergie journalière disponible ($E_k$) et, à partir du profil de consommation et de la quantité d'énergie journalière disponible, allouer au groupe un crédit d'énergie ($Cr_k(T_i)$) pour chaque heure de la nouvelle journée ;
   - à un temps T situé dans une heure courante ($T_i$), estimer une quantité d'énergie consommée courante ($Ind_k(T)$) qui a été consommée par le groupe, et estimer une quantité d'énergie consommée précédente ($Ind_k(T_{i-1})$) qui a été consommée à la fin d'une heure précédente ;
   - au temps T, estimer une quantité d'énergie disponible ($E_{disp}(k, T_{i-1})$) qui était disponible à la fin de l'heure précédente ;
   - si une différence entre la quantité d'énergie consommée courante et la quantité d'énergie consommée précédente est supérieure ou égale à la somme de la quantité d'énergie disponible et d'un crédit d'énergie alloué pour l'heure courante, couper la distribution d'énergie électrique à destination du groupe jusqu'au début d'une heure suivante.

2. Procédé de distribution selon la revendication 1, comportant de plus l'étape, lorsque le temps T atteint la fin de l'heure courante ($T_i$), de recalculer la quantité d'énergie disponible en utilisant la formule :

$$E_{disp}(k,\ T_i) = E_{disp}(k,\ T_{i-1}) + Cr_k(T_i) - Ind_k(T_i) + Ind_k(T_{i-1}),$$

où k désigne un groupe $(G_k)$, $E_{disp}(k, T_i)$ est une quantité d'énergie disponible à la fin de l'heure courante $T_i$, $E_{disp}(k, T_{i-1})$ est la quantité d'énergie disponible qui était disponible à la fin de l'heure précédente $T_{i-1}$, $Cr_k(T_i)$ est un crédit d'énergie alloué pour l'heure courante $T_i$, $Ind_k(T_{i-1})$ est la quantité d'énergie consommée précédente, et $Ind_k(T_i)$ est une quantité d'énergie consommée à la fin de l'heure courante $T_i$.

3. Procédé de distribution selon la revendication 1, dans lequel, lorsqu'un crédit d'énergie n'a pas été entièrement consommé, le crédit d'énergie est reporté au début de l'heure suivante.

4. Procédé de distribution selon la revendication 1, comprenant en outre les étapes d'attribuer des priorités aux groupes et, si un crédit d'énergie d'un groupe de haute priorité est épuisé, d'allouer un crédit d'énergie d'un groupe de basse priorité au groupe de haute priorité.

5. Procédé de distribution selon la revendication 1, comprenant en outre les étapes d'acquérir des données de prévision météorologique, d'en déduire une quantité d'énergie prévisionnelle pouvant être stockée dans des batteries et, si la quantité d'énergie prévisionnelle est insuffisante par rapport à un nombre de journées consécutives sans ensoleillement pendant lesquelles les groupes doivent être alimentés, d'ajuster les quantités d'énergie journalière disponible en fonction de la quantité d'énergie prévisionnelle.

6. Procédé de distribution selon la revendication 1, dans lequel la coupure de la distribution d'énergie électrique consiste à ouvrir un organe de coupure (15) positionné dans un compteur réseau (12) situé en amont du groupe $(G_k)$.

7. Procédé de distribution selon la revendication 1, dans lequel la coupure de la distribution d'énergie électrique consiste à ouvrir un organe de coupure (106) positionné dans un coffret de distribution décentralisé (103), chaque coffret de distribution décentralisé (103) étant connecté à plusieurs groupes et comprenant un compteur et un organe de coupure pour chaque groupe.

8. Procédé de distribution selon la revendication 6, le procédé de distribution étant mis en œuvre dans un équipement électrique de contrôle (7) qui commande les organes de coupure (15 ; 106).

9. Equipement électrique de contrôle d'une centrale électrique solaire apte à commander au moins un organe de coupure (15 ; 106), l'équipement électrique de contrôle comprenant un module de communication (11) et un composant de traitement (8) agencé pour mettre en œuvre le procédé de distribution selon l'une des revendications précédentes.

10. Réseau électrique isolé (1) comportant une centrale électrique solaire (2 ; 101) et une pluralité de groupes d'au moins une installation électrique, la centrale électrique solaire comprenant un équipement électrique de contrôle selon la revendication 9.

11. Réseau électrique isolé selon la revendication 10, comprenant en outre une pluralité de coffrets de distribution décentralisés (103) connectés chacun à une pluralité de groupes.

12. Programme d'ordinateur comprenant des instructions de code qui conduisent l'équipement selon la revendication 9 à exécuter les étapes procédé selon l'une des revendications 1 à 8.

13. Support d'enregistrement lisible par un ordinateur, sur lequel est enregistré un programme d'ordinateur selon la revendication 12.

**Patentansprüche**

1. Verfahren zur Verteilung einer aus Solarenergie stammenden elektrischen Energie an eine Vielzahl von Gruppen $(G_k)$ mindestens einer elektrischen Anlage $(I_e)$, umfassend die Schritte:

- Definieren eines Verbrauchsprofils für jede Gruppe, wobei das Verbrauchsprofil aus prozentualen Verbrauchsanteilen (P) gebildet ist, die jeweils mit einer anderen Stunde eines Referenztages in Verbindung stehen;

- Definieren, für jeden neuen Tag, einer verfügbaren täglichen Energiemenge ($E_k$) für jede Gruppe und Zuteilen eines Energiekredits ($Cr_k(T_i)$) zur Gruppe für jede Stunde des neuen Tages anhand des Verbrauchsprofils und der verfügbaren täglichen Energiemenge;

- zu einem Zeitpunkt T, der sich in einer laufenden Stunde ($T_i$) befindet, Schätzen einer laufenden verbrauchten Energiemenge ($Ind_k(T)$), die von der Gruppe verbraucht worden ist, und Schätzen einer vorhergehenden verbrauchten Energiemenge ($Ind_k(T_{i-1})$), die am Ende einer vorhergehenden Stunde verbraucht worden ist;

- zu dem Zeitpunkt T, Schätzen einer verfügbaren Energiemenge ($E_{disp}(k, T_{i-1})$), die am Ende der vorhergehenden Stunde verfügbar war;

- wenn eine Differenz zwischen der laufenden verbrauchten Energiemenge und der vorhergehenden verbrauchten Energiemenge größer oder gleich der Summe aus der verfügbaren Energiemenge und einem für die laufende Stunde zugeteilten Energiekredit ist, Unterbrechen der Verteilung der elektrischen Energie an die Gruppe bis zum Beginn einer folgenden Stunde.

2. Verfahren zur Verteilung nach Anspruch 1, ferner umfassend, wenn der Zeitpunkt T das Ende der laufenden Stunde ($T_i$) erreicht, den Schritt des erneuten Berechnens der verfügbaren Energiemenge unter Verwendung der Formel:

$$E_{disp}(k, T_i) = E_{disp}(k, T_{i-1}) + Cr_k(T_i) - Ind_k(T_i) + Ind_k(T_{i-1}),$$

wobei k eine Gruppe ($G_k$) bezeichnet, $E_{disp}(k, T_i)$ eine verfügbare Energiemenge am Ende der laufenden Stunde $T_i$ ist, $E_{disp}(k, T_{i-1})$ die verfügbare Energiemenge ist, die am Ende der vorhergehenden Stunde $T_{i-1}$ verfügbar war, $Cr_k(T_i)$ ein für die laufende Stunde $T_i$ zugeteilter Energiekredit ist, $Ind_k(T_{i-1})$ die vorhergehende verbrauchte Energiemenge und $Ind_k(T_i)$ eine am Ende der laufenden Stunde $T_i$ verbrauchte Energiemenge ist.

3. Verfahren zur Verteilung nach Anspruch 1, bei dem, wenn ein Energiekredit nicht vollständig verbraucht wurde, der Energiekredit auf den Anfang der folgenden Stunde übertragen wird.

4. Verfahren zur Verteilung nach Anspruch 1, ferner umfassend die Schritte des Zuweisens von Prioritäten zu den Gruppen und, wenn ein Energiekredit einer Gruppe mit hoher Priorität verbraucht ist, Zuteilen eines Energiekredits einer Gruppe mit niedriger Priorität zur Gruppe mit hoher Priorität.

5. Verfahren zur Verteilung nach Anspruch 1, ferner umfassend die Schritte des Erfassens von Wettervorhersagedaten, des daraus Ableitens einer voraussichtlichen Energiemenge, die in den Batterien gespeichert werden kann, und, wenn die voraussichtliche Energiemenge in Bezug auf eine Anzahl von aufeinanderfolgenden Tagen ohne Sonneneinstrahlung, während denen die Gruppen versorgt werden müssen, unzureichend ist, des Anpassens der verfügbaren täglichen Energiemengen in Abhängigkeit der voraussichtlichen Energiemenge.

6. Verfahren zur Verteilung nach Anspruch 1, bei dem das Unterbrechen der Verteilung der elektrischen Energie im Öffnen eines Abschaltorgans (15) besteht, das in einem Netzwerkzähler (12) positioniert ist, der sich stromaufwärts der Gruppe ($G_k$) befindet.

7. Verfahren zur Verteilung nach Anspruch 1, bei dem das Unterbrechen der Verteilung der elektrischen Energie im Öffnen eines Abschaltorgans (106) besteht, das in einem dezentralisierten Stromverteilerkasten (103) positioniert ist, wobei jeder dezentralisierte Stromverteilerkasten (103) mit mehreren Gruppen verbunden ist und einen Zähler und ein Abschaltorgan für jede Gruppe umfasst.

8. Verfahren zur Verteilung nach Anspruch 6, wobei das Verfahren zur Verteilung in einer elektrischen Steuerausrüstung (7) verwendet wird, die die Abschaltorgane (15; 106) steuert.

9. Elektrische Steuerausrüstung für ein Solarkraftwerk, die geeignet ist, mindestens ein Abschaltorgan (15; 106) zu steuern, wobei die elektrische Steuerausrüstung ein Kommunikationsmodul (11) und eine Verarbeitungskomponente (8) umfasst, die ausgebildet ist, um das Verfahren zur Verteilung nach einem der vorhergehenden Ansprüche durchzuführen.

10. Isoliertes Stromnetz (1), umfassend ein Solarkraftwerk (2; 101) und eine Vielzahl von Gruppen mindestens einer elektrischen Anlage, wobei das Solarkraftwerk eine elektrische Steuerausrüstung nach Anspruch 9 umfasst.

11. Isoliertes Stromnetz nach Anspruch 10, ferner umfassend eine Vielzahl von dezentralisierten Stromverteilerkästen (103), die jeweils mit einer Vielzahl von Gruppen verbunden sind.

12. Computerprogramm, umfassend Code-Anweisungen, die die Ausrüstung nach Anspruch 9 zur Ausführung der Schritte des Verfahrens nach einem der Ansprüche 1 bis 8 führen.

13. Aufzeichnungsträger, der von einem Computer lesbar und auf dem ein Computerprogramm nach Anspruch 12 gespeichert ist.

**Claims**

1. A method of distributing electrical energy derived from solar energy to a plurality of groups ($G_k$) each comprising at least one electrical installation ($I_e$), the method comprising the steps of:

   • defining a consumption profile for each group, the consumption profile being made up of consumption percentages (P), each associated with a distinct hour of a reference day;
   • for each new day, defining an available daily quantity of energy ($E_k$) for each group and, on the basis of the consumption profile and of the available daily quantity of energy, allocating to the group an energy credit ($Cr_k(T_i)$) for each hour of the new day;
   • at a time T situated within a current hour ($T_i$), estimating a current consumed quantity of energy ($Ind_k(T)$) that has been consumed by the group, and estimating a preceding consumed quantity of energy ($Ind_k(T_{i-1})$) that was consumed at the end of a preceding hour;
   • at the time of T, estimating an available quantity of energy ($E_{disp}(k, T_{i-1})$) that was available at the end of the preceding hour; and
   • if the difference between the current consumed quantity of energy and the preceding consumed quantity of energy is greater than or equal to the sum of the available quantity of energy plus an energy credit allocated for the current hour, interrupting the distribution of electrical energy to the group until the beginning of a following hour.

2. A distribution method according to claim 1, further comprising the step, when the time T reaches the end of the current hour ($T_i$), of recalculating the available quantity of energy by using the formula:

$$E_{disp}(k, T_i) = E_{disp}(k, T_{i-1}) + Cr_k(T_i) - Ind_k(T_i) + Ind_k(T_{i-1})$$

   where $k$ designates a group ($G_k$), $E_{disp}(k, T_i)$ is the quantity of energy available at the end of the current hour $T_i$, $E_{disp}(k, T_{i-1})$ is the quantity of energy available at the end of the preceding hour $T_{i-1}$, $Cr_k(T_i)$ is the energy credit allocated for the current hour $T_i$, $Ind_k(T_{i-1})$ is the quantity of energy consumed at the end of the preceding hour $T_{i-1}$, and $Ind_k(T_i)$ is the quantity of energy consumed at the end of the current hour $T_i$.

3. A distribution method according to claim 1, wherein, when an energy credit has not been used up completely, the energy credit is carried over to the beginning of the following hour.

4. A distribution method according to claim 1, further comprising the steps of allocating priorities to the groups, and if an energy credit of a high-priority group is used up, of allocating an energy credit of a low-priority group to the high-priority group.

5. A distribution method according to claim 1, further comprising the steps of acquiring weather forecast data, deducing therefrom a predicted quantity of energy that can be stored in batteries, and if the predicted quantity of energy is insufficient compared with a number of consecutive days without sunshine during which the groups need to be powered, adjusting the available daily quantities of energy as a function of the predicted quantity of energy.

6. A distribution method according to claim 1, wherein interrupting the distribution of electrical energy consists in opening switchgear (15) positioned in a network meter (12) situated upstream from the group ($G_k$).

7. A distribution method according to claim 1, wherein interrupting the distribution of electrical energy consists in opening switchgear (106) positioned in a decentralized distribution cabinet (103), each decentralized distribution cabinet (103) being connected to a plurality of groups and having a respective meter and switchgear for each group.

8.  A distribution method according to claim 6, the distribution method being implemented in electrical control equipment (7) that controls the switchgear (15; 106).

9.  Electrical control equipment for a solar power plant adapted to command at least one switchgear (15; 106), the electrical control equipment comprising a communications module (11) and a processor component (8) arranged to perform the distribution method according to any preceding claim.

10. An isolated electricity network (1) comprising a solar power plant (2; 101) and a plurality of groups, each of at least one electrical installation, the solar power plant including electrical control equipment according to claim 9.

11. An isolated electricity network according to claim 10, further comprising a plurality of decentralized distribution cabinets (103), each connected to a plurality of groups.

12. A computer program including code instructions which lead the equipment according to claim 9 to carry out the steps of the method according to any one of claims 1 to 8.

13. A computer readable data medium having recorded thereon a computer program according to claim 12.

Fig. 1

| Heure H | 6 | 7 | 8 | 9 | 10 | 11 | 12 | 13 | 14 | 15 | 16 | 17 | 18 | 19 | 20 | 21 | 22 | 23 | 0 | 1 | 2 | 3 | 4 | 5 |
|---|---|---|---|---|---|---|---|---|---|---|---|---|---|---|---|---|---|---|---|---|---|---|---|---|
| Groupe $G_1$ | 6 | 2.5 | 7 | 7 | 7 | 7 | 7 | 7 | 7 | 7 | 7 | 7 | 7 | 2.5 | 2.5 | 2.5 | 2.5 | 2 | 2 | 2 | 2 | 2 | 2 | 2 |
| Groupe $G_2$ | 6 | 3 | 6 | 6 | 6 | 6 | 6 | 7 | 7 | 7 | 7 | 7 | 7 | 3 | 1 | 1 | 1 | 1 | 1 | 1 | 1 | 1 | 1 | 1 |
| Groupe $G_3$ | | | | | | | | | | | | | | | 10 | 10 | 10 | 10 | 10 | 10 | 10 | 10 | 10 | 10 |
| Groupe $G_4$ | 7 | 4 | 4 | 4 | 4 | 4 | 4 | 4 | 4 | 4 | 4 | 4 | 4 | 9 | 9 | 9 | 9 | 2 | 2 | 1 | 1 | 1 | 1 | 1 |

21

P        P

**Fig. 2**

EP 3 422 519 B1

$$E_{disp}(k,T)=0 \; ; T=T0=0$$
$$Cde_k=1$$

E0

For i=1 to 24
$$T_{i-1} < T < T_i$$

$$Ind_k(T)-Ind_k(T_{i-1})<E_{disp}(k,T_{i-1})+Cr_k(T_i)?$$

E1

NON

$$Cde_k=0$$

E5

OUI

$$Cde_k=1$$

E2

$$T < T_i ?$$

E3

OUI

NON

$$E_{disp}(k,T_i)=E_{disp}(k,T_{i-1})+Cr_k(T_i)-Ind_k(T_i)+Ind_k(T_{i-1})$$

E4

$$i = 0$$

E7

OUI

$$i > 24 ?$$

NON

E6

**Fig. 3**

Fig. 4

**Fig. 5**

EP 3 422 519 B1

## RÉFÉRENCES CITÉES DANS LA DESCRIPTION

**Documents brevets cités dans la description**

- WO 2015015528 A1